(19) **Europäisches Patentamt / European Patent Office / Office européen des brevets**

(11) **EP 1 515 421 B1**

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(51) Int Cl.:
*H02M 1/14* (2006.01)    *H02M 7/48* (2007.01)

(21) Anmeldenummer: **03405668.9**

(22) Anmeldetag: **12.09.2003**

(54) **Verfahren zum Betrieb einer dreiphasigen Umrichterschaltung**

Method for operating a three-phase inverter circuit

Procédé d'exploitation d'un circuit convertisseur triphasé

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**16.03.2005 Patentblatt 2005/11**

(73) Patentinhaber: **ABB Research Ltd.**
**8050 Zürich (CH)**

(72) Erfinder:
• **Herold, Simon**
**8902 Urdorf (CH)**
• **Sario, Petteri**
**5408 Ennetbaden (CH)**
• **Gerhard, Bilal**
**5443 Niederrohrdorf (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

(56) Entgegenhaltungen:
**EP-A- 0 534 242        US-A- 4 392 099**

• **HAORAN ZHANG ET AL: "A reduced switch dual-bridge inverter topology for the mitigation of bearing currents, EMI and DC-link voltage variations" INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, 3. Oktober 1999 (1999-10-03), Seiten 1945-1949, XP010355130 ISBN: 0-7803-5589-X**
• **VON JOUANNE A ; HAORAN ZHANG : " A Dual-Bridge Inverter Approach to Eliminating Common-Mode Voltages and Bearing and Leakage Currents " IEEE TRANSACTIONS ON POWER ELECTRONICS, Bd. 14, Nr. 1, Januar 1999 (1999-01), Seiten 43-48, XP002270967 ISBN: 0885-8993**
• **YO-HAN LEE; RAE-YOUNG KIM; DONG-SEOK HYUN : "A novel SVPWM Strategy Considering DC-link Balancing for a Multi-level Voltage Source Inverter " APEC '99. FOURTEENTH ANNUAL APPLIED POWER ELECTRONICS CONFERENCE AND EXPOSITION. 1999 CONFERENCE PROCEEDINGS (CAT. NO. 99CH36285), PROCEEDINGS OF APEC '99 - APPLIED POWER ELECTRONICS CONFERENCE, DALLAS, TX, USA, 14-18 MARCH 1999 , 14. März 1999 (1999-03-14), Seiten 509-514, XP002270968 ISBN: 0-7803-5160-6**

**Beschreibung**

**Technisches Gebiet**

Die Erfindung bezieht sich auf das Gebiet der Leistungselektronik. Sie geht aus von einem Verfahren zum Betrieb einer dreiphasigen Umrichterschaltung gemäss dem Oberbegriff des unabhängigen Anspruchs.

**Stand der Technik**

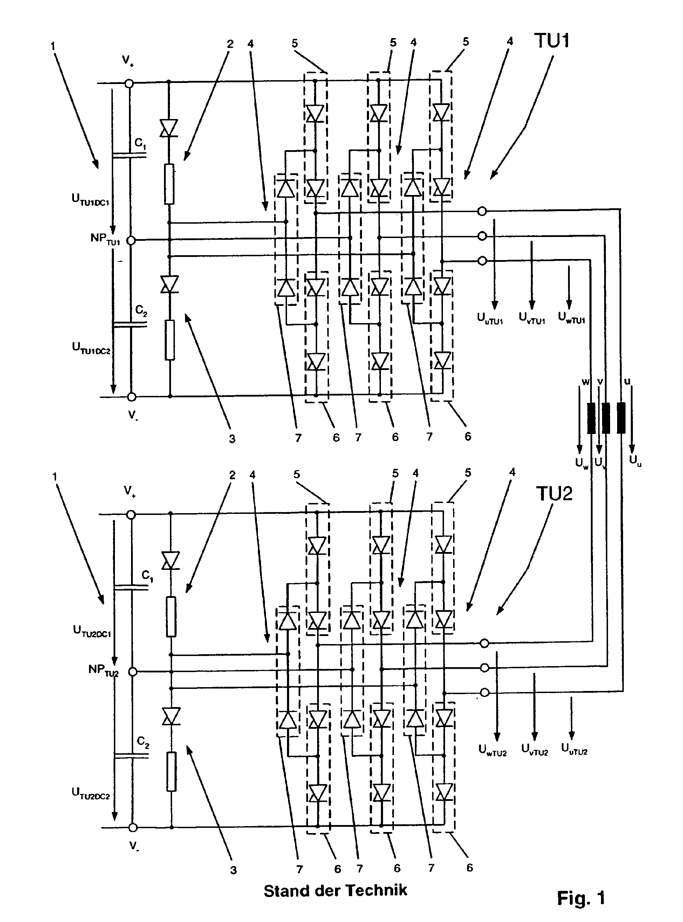

Heute werden in vielen Anwendungen dreiphasige Hochleistungsspannungsumrichterschaltungen eingesetzt. Eine solche Umrichterschaltung umfasst dazu beispielsweise zwei Teilumrichter, wobei jeder Teilumrichter einen Gleichspannungskreis aufweist, der durch einen ersten Kondensator und durch einen in Serie zum ersten Kondensator geschalteten zweiten Kondensator gebildet ist. Der Gleichspannungskreis weist weiterhin am ersten Kondensator einen ersten Hauptanschluss, am zweiten Kondensator einen zweiten Hauptanschluss und einen durch die zwei seriell miteinander verbundenen Kondensatoren gebildeten Teilanschluss auf. Weiterhin umfasst jeder Teilumrichter Leistungshalbleiterschalter, welche in üblicher Weise verschaltet sind. Darüber weist jeder Teilumrichter drei Teilumrichterphasen auf, die zur Bildung der drei Umrichterphasen miteinander verbunden sind. Die vorstehend genannte gängige dreiphasige Umrichterschaltung ist in Fig. 1 gezeigt.

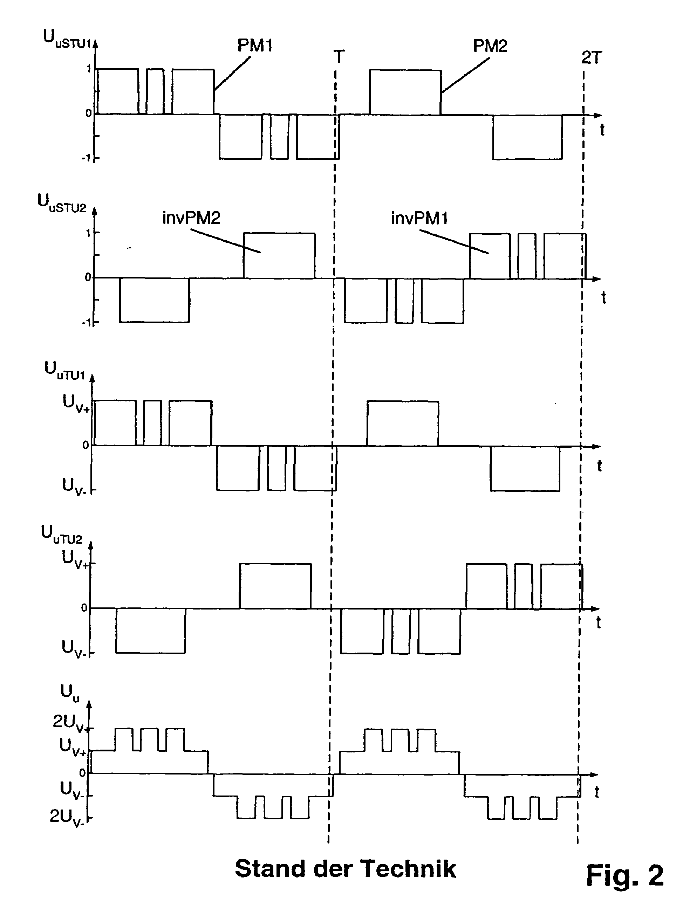

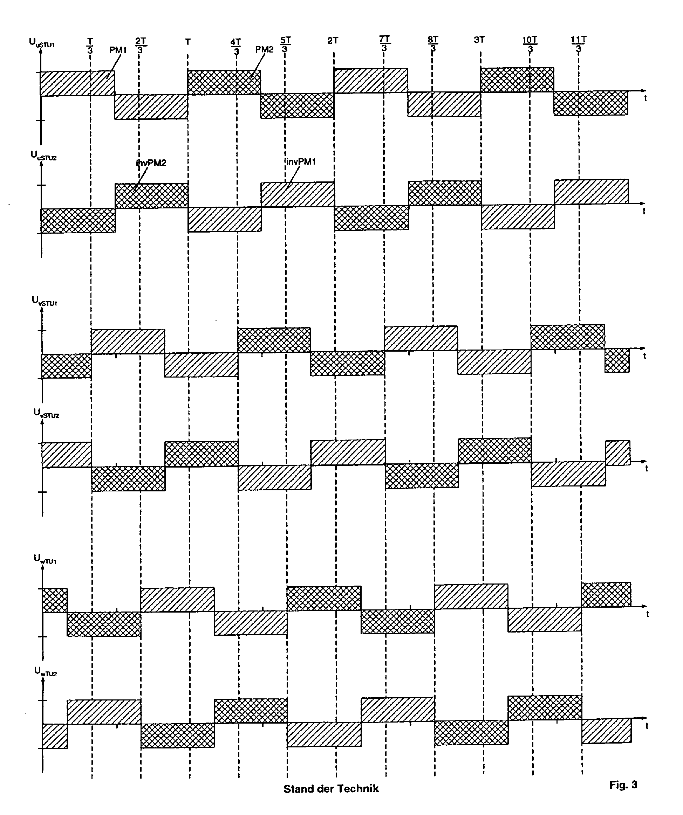

Bei einem üblichen Verfahren zum Betrieb der vorstehend genannten dreiphasigen Umrichterschaltung wird der erste und zweite Teilumrichter durch jeweils ein Ansteuersignal bezüglich eines jeden Teilumrichters angesteuert. Ein solches Ansteuersignal ist typischerweise durch Ansteuersignalabfolgen gebildet, durch welche dann der zugehörige Teilumrichter, insbesondere dessen Leistungshalbleiterschalter, angesteuert wird. In Fig. 2 ist unter anderem ein zeitlicher Verlauf eines solchen Ansteuersignals des ersten und zweiten Teilumrichters für eine Umrichterphase mit den zugehörigen Ansteuersignalabfolgen gezeigt. Weiterhin sind in Fig. 3 zeitliche Verläufe von Ansteuersignalen des ersten und zweiten Teilumrichters für alle drei Umrichterphasen gezeigt. Gemäss den Verläufen in Fig. 3 wird für eine erste Umrichterphase jeweils zum Zeitpunkt $(2n) \cdot T$ für die Zeitdauer T der erste Teilumrichter durch eine erste Ansteuersignalabfolge und jeweils zum Zeitpunkt $(2n+1) \cdot T$ für die Zeitdauer T durch eine zweite Ansteuersignalabfolge angesteuert, wobei n=0, 1, 2, 3,... ist und T eine Periodendauer der Phasenspannung der ersten Umrichterphase ist. Weiterhin wird gemäss Fig. 3 für die erste Umrichterphase jeweils zum Zeitpunkt $(2n) \cdot T$ für die Zeitdauer T der zweite Teilumrichter durch die invertierte zweite Ansteuersignalabfolge und jeweils zum Zeitpunkt $(2n+1) \cdot T$ für die Zeitdauer T durch die invertierte erste Ansteuersignalabfolge angesteuert. Weiterhin wird gemäss Fig. 3 für eine zweite Umrichterphase jeweils zum

Zeitpunkt $\left(2n + \dfrac{2}{3}\right) \cdot T$) für die Zeitdauer T der erste Teilumrichter durch die erste Ansteuersignal-abfolge und jeweils zum Zeitpunkt $\left(2n + \dfrac{5}{3}\right) \cdot T$ für die Zeitdauer T durch die zweite Ansteuer-signalabfolge angesteuert. Desweiteren wird gemäss Fig. 3 für die zweite Umrichterphase jeweils zum Zeitpunkt $\left(2n + \dfrac{2}{3}\right)$ für die Zeitdauer T der zweite Teilumrichter durch die invertierte zweite Ansteuersignalabfolge und jeweils zum Zeitpunkt $\left(2n + \dfrac{5}{3}\right) \cdot T$ für die Zeitdauer T durch die invertierte erste Ansteuersignalabfolge angesteuert. Darüber hinaus wird gemäss Fig. 3 für eine dritte Umrichterphase jeweils zum Zeitpunkt $\left(2n + \dfrac{1}{3}\right) \cdot T$ für die Zeitdauer T der erste Teilumrichter durch die erste Ansteuersignalabfolge und jeweils zum Zeitpunkt $\left(2n + \dfrac{4}{3}\right) \cdot T$ für die Zeitdauer T durch die zweite Ansteuersignalabfolge angesteuert. Schliesslich wird gemäss Fig. 3 für die dritte Umrichterphase jeweils zum Zeitpunkt $\left(2n + \dfrac{1}{3}\right) \cdot T$ für die Zeitdauer T der zweite Teilumrichter durch die invertierte zweite Ansteuersignalabfolge und jeweils zum Zeitpunkt $\left(2n + \dfrac{4}{3}\right) \cdot T$ für die Zeitdauer T durch die invertierte erste Ansteuersignalabfolge angesteuert.

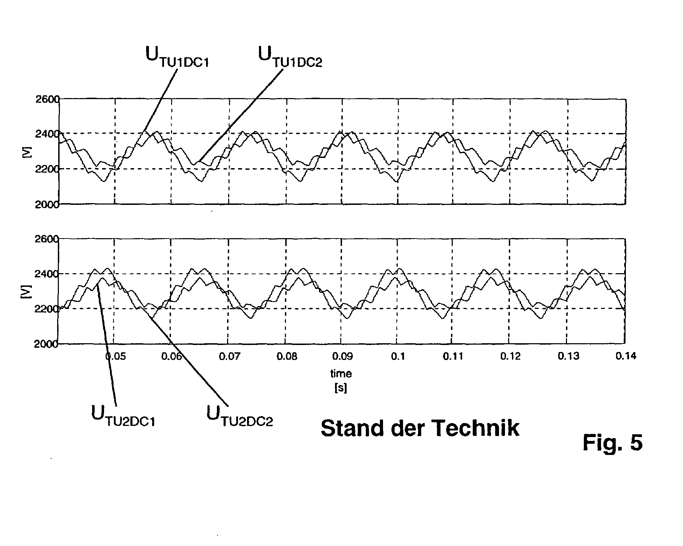

Problematisch bei dem vorstehend beschriebenen Verfahren zum Betrieb der genannten Umrichterschaltung ist, dass bei Ansteuersignalabfolgen mit einer kleinen Amplitude bezüglich der Grundschwingung der entsprechenden Ansteuersignalabfolge die Spannung über dem jeweiligen Gleichspannungskreis des zugehörigen Teilumrichters ansteigt, da dann weniger Energie aus dem entsprechende Gleichspannungskreis entnommen wird. Werden Ansteuersignalabfolgen mit einer grossen Amplitude bezüglich der Grundschwingung der entsprechenden Ansteuersignalabfolge verwendet, so sinkt die Spannung über dem jeweiligen Gleichspannungskreis des zugehörigen Teilumrichters ab, da dann mehr Energie aus dem entsprechende Gleichspannungskreis entnommen wird. Weist beispielsweise die erste Ansteuersignalabfolge eine grosse Amplitude bezüglich der Grundschwingung und die zweite Ansteuersignalabfolge eine kleine Amplitude bezüglich der Grundschwingung auf und wird beispielsweise der erste Teilumrichter für die erste Umrichterphase nach dem vorstehend beschriebenen Verfahren zum Betrieb der Umrichterschaltung betrieben, so schwingt die Spannung über dem Gleichspannungskreis des ersten Teilumrichters erheblich aufgrund des Wechsels von der ersten Ansteuersignalabfolge zur zweiten Ansteuersignalabfolge und wieder zurück zur ersten Ansteuersignalabfolge usw.. Entsprechendes gilt für die Spannung des Gleichspannungskreises des zweiten Teilumrichters und für die anderen Umrichterphasen. In Fig. 5 ist beispielhaft eine solche Schwingung für das vorstehend beschriebene gängige Verfahren zum Betrieb der Umrichterschaltung nach Fig. 1 gezeigt, wobei in Fig. 5 jeweils Teilspannungen an den beiden Kondensatoren des zugehörigen Gleichspannungskreises des jeweiligen Teilumrichters gezeigt sind und die gesamte Spannung über dem jeweiligen Gleichspannungskreis sich dann aus der Summe der Teilspannungen ergibt. Durch eine solche Schwingung im Gleichspannungskreis des jeweiligen Teilumrichters werden die Leistungshalbleiterschalter des zugehörigen Teilumrichters stark belastet, wodurch die Leistungshalbleiterschalter schneller altern, beschädigt oder gar zerstört werden können. Weiterhin ist die Schwingung auch auf den Phasenspannungen der Umrichterschaltung vorhanden, so dass eine mit den Umrichterphasen normalerweise verbundene elektrische Last auch stark belastet wird, was ebenfalls zu einem schnellen Altern, einer Beschädigung oder Zerstörung der elektrischen Last führen kann. Ferner ist die Schwingung auch auf einer Netzspannung eines elektrischen Versorgungsnetzes vorhanden, falls der jeweilige Gleichspannungskreis über einen gängigen Gleichrichter und einen Netztransformator mit einem solchen elektrischen Versorgungsnetz verbunden ist. Die vorstehend genannte Schwingung belastet dann das elektrische Versorgungsnetz zusätzlich.

Ein bekanntes Verfahren zur Reduktion von Schwingungen im Gleichspannungskreis offenbart die Publikation von H. Zhứng und A.v.Jouanne: "A Reduced Switch Dual-Bridge Invester Topology for the Mitigation of Bearing Currents EMI and DC-Link Voltage Variations "INDUSTRY APPLICATIONS CONFERENCE, 1999, THIRTY-FOURTH AS ANNUAL MEETING, ISBN:0-7803-5589-X.

**Darstellung der Erfindung**

Aufgabe der Erfindung ist es deshalb, ein Verfahren zum Betrieb einer dreiphasigen Umrichterschaltung anzugeben, durch welches Schwingungen in Gleichspannungskreisen von Teilumrichtern der Umrichterschaltung verringert beziehungsweise klein gehalten werden können. Diese Aufgabe wird durch die Merkmale des Anspruchs 1 gelöst. Im abhängigen Anspruch ist eine vorteilhafte Weiterbildung der Erfindung angegeben.

Beim erfindungsgemässen Verfahren zum Betrieb einer dreiphasigen Umrichterschaltung wird für eine erste Umrichterphase jeweils zum Zeitpunkt (2n)·T für die Zeitdauer T der erste Teilumrichter durch eine erste Ansteuersignalabfolge und jeweils zum Zeitpunkt (2n+1)·T für die Zeitdauer T durch eine zweite Ansteuersignalabfolge angesteuert, wobei n=0, 1, 2, 3,... ist und T eine Periodendauer der Phasenspannung der ersten Umrichterphase ist. Weiterhin wird für die erste Umrichterphase jeweils zum Zeitpunkt (2n)·T für die Zeitdauer T der zweite Teilumrichter durch die invertierte zweite Ansteuersignalabfolge und jeweils zum Zeitpunkt (2n +1)·T für die Zeitdauer T durch die invertierte erste Ansteuersignalabfolge angesteuert. Ferner wird für eine zweite Umrichterphase jeweils zum Zeitpunkt $(2n + \frac{2}{3}) \cdot T$ für die Zeitdauer T der erste Teilumrichter durch die erste Ansteuersignalabfolge und jeweils zum Zeitpunkt $(2n + \frac{5}{3}) \cdot T$ für die Zeitdauer T durch die zweite Ansteuersignalabfolge angesteuert. Desweiteren wird für die zweite Umrichterphase jeweils zum Zeitpunkt $(2n + \frac{2}{3})$ für die Zeitdauer T der zweite Teilumrichter durch die invertierte zweite Ansteuersignalabfolge und jeweils zum Zeitpunkt $(2n + \frac{5}{3}) \cdot T$ für die Zeitdauer T durch die invertierte erste Ansteuersignalabfolge angesteuert. Erfindungsgemäss wird für eine dritte Umrichterphase jeweils zum Zeitpunkt $(2n + \frac{1}{3}) \cdot T$ für die Zeitdauer T der erste Teilumrichter durch die zweite Ansteuersignalabfolge und der zweite Teilumrichter durch die invertierte erste Ansteuersignalabfolge und zudem für die dritte Umrichterphase jeweils zum Zeitpunkt $(2n + \frac{4}{3}) \cdot T$ für die Zeitdauer T der erste Teilumrichter durch die erste Ansteuersignalabfolge und der zweite Teilumrichter durch die invertierte zweite Ansteuersignalabfolge angesteuert. Dadurch, dass für eine der Umrichterphasen, vorstehend für die dritte Umrichterphase jeweils zum Zeitpunkt $(2n + \frac{1}{3}) \cdot T$ der erste Teilumrichter durch die zweite Ansteuersignalabfolge und der zweite Teilumrichter durch die invertierte erste Ansteuersignalabfolge und ferner jeweils zum Zeitpunkt $(2n + \frac{4}{3}) \cdot T$ der erste Teilumrichter durch die erste Ansteuersignalabfolge und der zweite Teilumrichter durch die invertierte zweite Ansteuersignalabfolge angesteuert wird, wird vorteilhaft gegenüber dem aus dem Stand der Technik bekannten Verfahren eine signifikante Verringerung von Schwingungen im jeweiligen Gleichspannungskreis des entsprechenden Teilumrichters erzielt. Dies bedeutet, dass die durch die erfindungsgemässe Ansteuerung des jeweiligen Teilumrichters, d.h. die durch die Schalthandlungen der Leistungshalbleiterschalter des jeweiligen Teilumrichters hervorgerufenen Schwingungen im jeweiligen Gleichspannungskreis klein gehalten werden können und somit Leistungshalbleiterschalter der Teilumrichter, eine an die Umrichterschaltung üblicherweise angeschlossene elektrische Last und ein mit der Umrichterschaltung verbundenes elektrisches Versorgungsnetz mit Vorteil nicht nennenswert oder nur sehr gering belastet werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1   eine gängige Ausführungsform einer dreiphasigen Umrichterschaltung,

Fig. 2   typischer zeitlicher Verlauf eines Ansteuersignals des ersten und zweiten Teilumrichters, einer Teilumrichterphasenspannung des ersten und zweiten Teilumrichters und einer Umrichterphasenspannung,

Fig. 3   typische zeitliche Verläufe von Ansteuersignalen des ersten und zweiten Teilumrichters für alle drei Umrichterphasen,

Fig. 4   zeitliche Verläufe von erfindungsgemässen Ansteuersignalen des ersten und zweiten Teilumrichters für alle drei Umrichterphasen,

Fig. 5   typische zeitliche Verläufe von Teilgleichspannungen der Gleichspannungskreise des ersten und zweiten Teilumrichters und

Fig. 6   zeitliche Verläufe nach der Erfindung von Teilgleichspannungen der Gleichspannungskreise des ersten und zweiten Teilumrichters.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand, des anschließlich durch die Ansprüche beschräubt ist.

**Wege zur Ausführung der Erfindung**

In Fig. 1 ist eine Ausführungsform einer dreiphasigen Umrichterschaltung gezeigt. Die Umrichterschaltung nach Fig. 1 umfasst zwei Teilumrichter TU1, TU2, wobei jeder Teilumrichter TU1, TU2 einen Gleichspannungskreis 1 aufweist, der durch einen ersten Kondensator $C_1$ und durch einen in Serie zum ersten Kondensator $C_1$ geschalteten zweiten Kondensator $C_2$ gebildet ist. Weiterhin weist jeder Gleichspannungskreis 1 am ersten Kondensator $C_1$ einen ersten Hauptanschluss $V_+$, am zweiten Kondensator $C_2$ einen zweiten Hauptanschluss $V_-$ und einen durch die zwei seriell verbundenen Kondensatoren $C_1$, $C_2$ gebildeten Teilanschluss $NP_{TU1}$, $NP_{TU2}$ auf. Darüber hinaus umfasst jeder Teilumrichter TU1, TU2 gemäss Fig. 1 ein für jede Teilumrichterphase vorgesehenes Schaltsystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Schaltsystem 4 die erste Schaltgruppe 5 mit dem ersten Hauptanschluss $V_+$ und die zweite Schaltgruppe 6 mit dem zweiten Hauptanschluss $V_-$ verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss $NP_{TU1}$, $NP_{TU2}$ verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe als unidirektionale nicht-ansteuerbare Halbleiterschalter ausgebildet sind. Es ist aber auch denkbar, das auch die Leistungshalbleiterschalter der dritten Schaltgruppe als ansteuerbare bidirektionale Leistungshalbleiterschalter ausgebildet sind. Darüber hinaus sind die drei Teilumrichterphasen des ersten und zweiten Teilumrichters TU1, TU2 miteinander verbunden und bilden somit die Umrichterphasen u, v, w der Umrichterschaltung gemäss Fig. 1.

In Fig. 2 ist ein typischer zeitlicher Verlauf eines Ansteuersignals $U_{uSTU1}$, $U_{uSTU2}$ zur Ansteuerung des ersten und zweiten Teilumrichters TU1, TU2 bezüglich der ersten Umrichterphase u gezeigt. Ein solches Ansteuersignal $U_{uSTU1}$, $U_{uSTU2}$ ist gemäss Fig. 2 üblicherweise durch eine erste Ansteuersignalabfolge PM1 und durch eine zweite Ansteuersignalabfolge PM2 beziehungsweise durch die invertierte erste Ansteuersignalabfolge invPM1 und durch die invertierte zweite Ansteuersignalabfolge PM2 gebildet, durch welche dann der zugehörige Teilumrichter TU1, TU2, insbesondere dessen Leistungshalbleiterschalter, angesteuert werden. Bei der invertierten ersten und invertierten zweiten Ansteuersignalabfolge invPM1, invPM2 handelt es sich um die negierte erste beziehungsweise zweite Ansteuersignalabfolge PM1, PM2. Weiterhin ist in Fig. 2 eine Teilumrichterphasenspanung $U_{uTU1}$, $U_{uTU2}$ des ersten und zweiten Teilumrichters TU1, TU2 bezüglich der ersten Umrichterphase u und die zugehörige erste Umrichterphasenspannung $U_u$ gezeigt. Die in Fig. 1 eingezeichneten Teilumrichterphasenspannungen $U_{uTU1}$, $U_{vTU1}$, $U_{wTU1}$ des ersten Teilumrichters TU1 beziehen sich auf den zugehörigen Teilanschluss $NP_{TU1}$ des ersten Teilumrichters TU1. Die ferner in Fig. 1 eingezeichneten Teilumrichterphasenspannungen $U_{uTU2}$, $U_{vTU2}$, $U_{wTU2}$ des zweiten Teilumrichters TU2 beziehen sich auf den zugehörigen Teilanschluss $NP_{TU2}$ des zweiten Teilumrichters TU2. Im Idealfall weisen die beiden Teilanschlüsse $NP_{TU1}$, $NP_{TU2}$ des ersten und zweiten Teilumrichters TU1, TU2 dasselbe Potential auf, so dass sich dann die Umrichterphasenspannungen $U_u$, $U_v$, $U_w$ nach folgender Formel ergeben

$$U_u = U_{uTU1} - U_{uTU2}$$

$$U_v = U_{vTU1} - U_{vTU2}$$

$$U_w = U_{wTU1} - U_{wTU2}.$$

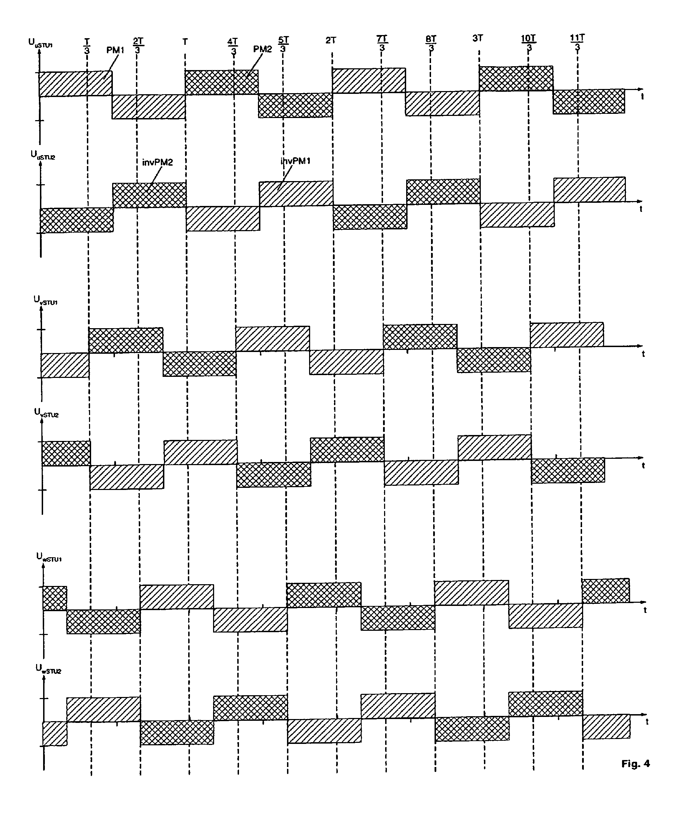

In Fig. 3 sind typische zeitliche Verläufe von Ansteuersignalen $U_{uSTU1}$, $U_{uSTU2}$ $U_{vSTU1}$, $U_{vSTU2}$ $U_{wSTU1}$, $U_{wSTU2}$ des ersten und zweiten Teilumrichters TU1, TU2 für alle drei Umrichterphasen u, v, w dargestellt. Weiterhin sind in Fig. 4 zeitliche Verläufe von erfindungsgemässen Ansteuersignalen $U_{uSTU1}$, $U_{uSTU2}$ $U_{vSTU1}$, $U_{vSTU2}$ $U_{wSTU1}$, $U_{wSTU2}$ des ersten und zweiten Teilumrichters TU1, TU2 für alle drei Umrichterphasen u, v, w gezeigt, wobei in Fig. 3 und Fig. 4 die erste Ansteuersignalabfolge PM1 und die invertierte erste Ansteuersignalabfolge invPM1 der Übersichtlichkeit halber "linien-schraffiert" und die zweite Ansteuersignalabfolge PM 2 und die invertierte zweite Ansteuersignalabfolge invPM2 "kreuzschraffiert" dargestellt ist. Beim erfindungsgemässen Verfahren zum Betrieb der dreiphasigen Umrichterschaltung wird nun gemäss Fig. 4 zunächst für eine erste Umrichterphase u jeweils zum Zeitpunkt $(2n) \cdot T$ für die Zeitdauer T der erste Teilumrichter TU1 durch eine erste Ansteuersignalabfolge PM1 und jeweils zum Zeitpunkt $(2n+1) \cdot T$ für die Zeitdauer T durch eine zweite Ansteuersignalabfolge PM2 angesteuert, wobei n=0, 1, 2, 3,... ist und T eine Periodendauer der Phasenspannung $U_u$ der ersten Umrichterphase u ist. Darüber hinaus wird für die erste Umrichterphase u jeweils zum Zeitpunkt $(2n) \cdot T$ für die Zeitdauer T der zweite Teilumrichter TU2 durch die invertierte zweite Ansteuersignalabfolge invPM2 und jeweils zum Zeitpunkt $(2n+1)$

$\cdot T$ für die Zeitdauer T durch die invertierte erste Ansteuersignalabfolge invPM1 angesteuert. Ferner wird gemäss Fig. 4 für eine zweite Umrichterphase w jeweils zum Zeitpunkt $\left(2n + \dfrac{2}{3}\right) \cdot T$ für die Zeitdauer T der erste Teilumrichter TU1 durch die erste Ansteuersignalabfolge PM1 und jeweils zum Zeitpunkt $\left(2n + \dfrac{5}{3}\right) \cdot T$ für die Zeitdauer T durch die zweite Ansteuersignalabfolge PM2 angesteuert. Desweiteren wird für die zweite Umrichterphase w jeweils zum Zeitpunkt $\left(2n + \dfrac{2}{3}\right) \cdot T$ für die Zeitdauer T der zweite Teilumrichter TU2 durch die invertierte zweite Ansteuersignalabfolge invPM2 und jeweils zum Zeitpunkt $\left(2n + \dfrac{5}{3}\right) \cdot T$ für die Zeitdauer T durch die invertierte erste Ansteuersignalabfolge invPM1 angesteuert. Durch die Ansteuerung wird erreicht, dass die Leistungshalbleiterschalter des jeweiligen Teilumrichters TU1, TU2 derart geschaltet werden, dass die jeweilige Teilumrichterphase gemäss Fig. 1 mit dem ersten Hauptanschluss $V_+$, mit dem zweiten Hauptanschluss $V_-$ oder mit dem entsprechenden Teilanschluss $NP_{TU1}$, $NP_{TU2}$ verbunden wird, d.h. es werden nur Spannungen $U_{V+}$, 0 oder $U_{V-}$ geschaltet, wobei bei einem symmetrischen Gleichspannungskreis 1 $U_{TU1DC1} = U_{TU1DC2} = U_{V+} = -U_{V-}$ bezüglich des ersten Teilumrichters TU1 und $U_{TU2DC1} = U_{TU2DC2} = U_{V+} = -U_{V-}$ bezüglich des zweiten Teilumrichters TU2 ist. Beispielhaft ergibt sich dann bei Ansteuerung des ersten und zweiten Teilumrichters TU1, TU2 durch das Ansteuersignal $U_{uSTU1}$, $U_{uSTU2}$ für die erste Umrichterphase u die in Fig. 2 dargestellte Teilumrichterphasenspanung $U_{uTU1}$, $U_{uTU2}$ des ersten und zweiten Teilumrichters TU1, TU2 und die erste Umrichterphasenspannung $U_u$ gemäss der vorstehend bereits erwähnten Formel

$$U_u = U_{uTU1} - U_{uTU2}.$$

Erfindungsgemäss wird für eine dritte Umrichterphase v jeweils zum Zeitpunkt $\left(2n + \dfrac{1}{3}\right) \cdot T$ für die Zeitdauer T der erste Teilumrichter TU1 durch die zweite Ansteuersignalabfolge PM2 und der zweite Teilumrichter TU2 durch die invertierte erste Ansteuersignalabfolge invPM1 angesteuert. Desweiteren wird für die dritte Umrichterphase v jeweils zum Zeitpunkt $\left(2n + \dfrac{4}{3}\right) \cdot T$ für die Zeitdauer T der erste Teilumrichter TU1 durch die erste Ansteuersignalabfolge PM1 und der zweite Teilumrichter TU2 durch die invertierte zweite Ansteuersignalabfolge invPM2 angesteuert.

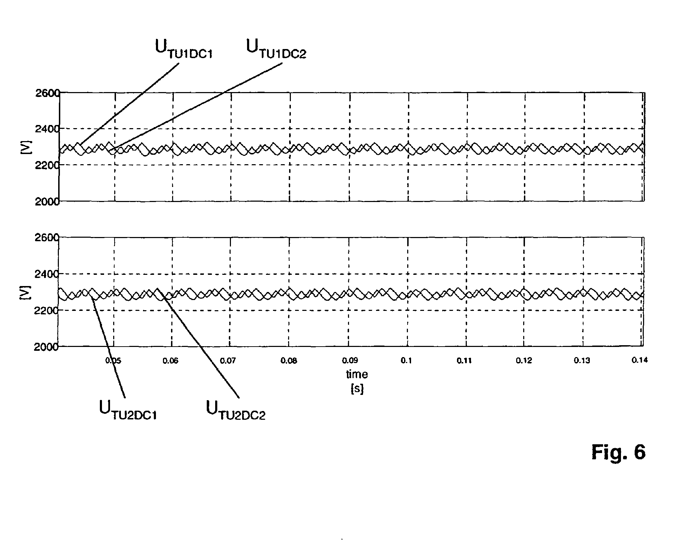

Gemäss Fig. 4 weisen die erste Ansteuersignalabfolge PM1, die invertierte erste Ansteuersignalabfolge invPM1, die zweite Ansteuersignalabfolge PM2 und die invertierte zweite Ansteuersignalabfolge invPM2 vorzugsweise jeweils eine Ablaufdauer auf, die der Zeitdauer T, d.h. der Periodendauer der ersten Umrichterphasenspannung $U_u$ entspricht. Mit Vorteil kann durch die Massnahme, dass für eine der Umrichterphasen u, v, w, vorstehend für die dritte Umrichterphase v Umrichterphase jeweils zum Zeitpunkt $(2n+\frac{1}{3}) \cdot T$ der erste Teilumrichter TU1 durch die zweite Ansteuersignalabfolge PM2 und der zweite Teilumrichter TU2 durch die invertierte erste Ansteuersignalabfolge invPM1 und ferner jeweils zum Zeitpunkt $(2n+\frac{4}{3}) \cdot T$ der erste Teilumrichter TU1 durch die erste Ansteuersignalabfolge PM1 und der zweite Teilumrichter TU2 durch die invertierte zweite Ansteuersignalabfolge invPM2 angesteuert wird, erreicht werden, dass Schwingungen im jeweiligen Gleichspannungskreis 1 des entsprechenden Teilumrichters TU1, TU2 verringert werden können. In Fig. 6 ist eine solche Schwingung für das erfindungsgemässe Verfahren zum Betrieb der Umrichterschaltung nach Fig. 1 gezeigt, wobei in Fig. 6 zeitliche Verläufe der Teilspannungen $U_{TU1DC1}$, $U_{TU1DC2}$ an den beiden Kondensatoren $C_1$, $C_2$ des Gleichspannungskreises 1 des ersten Teilumrichters TU1 und zeitliche Verläufe der Teilspannungen $U_{TU2DC1}$, $U_{TU2DC2}$ an den beiden Kondensatoren $C_1$, $C_2$ des Gleichspannungskreises 1 des zweiten Teilumrichters TU2 gezeigt sind. Im Vergleich zu dem eingangs beschriebenen Verfahren nach dem Stand der Technik und dem damit verbundenen Schwingungen der Gleichspannungskreise 1 des ersten und zweiten Teilumrichters TU1, TU2 gemäss den zeitlichen Verläufen der Teilspannungen $U_{TU1DC1}$, $U_{TU1DC2}$, $U_{TU2DC1}$, $U_{TU2DC2}$ an Gleichspannungskreisen des ersten und zweiten Teilumrichters TU1, TU2 nach Fig. 5, ist bei den zeitlichen Verläufen gemäss Fig. 6 eine vorteilhafte deutliche Verringerung der Schwingungen erkennbar. Somit wird die durch die erfindungsgemässe Ansteuerung der jeweiligen Teilumrichters TU1, TU2, d.h. die durch die Schalthandlungen der Leistungshalbleiterschalter des jeweiligen Teilumrichters TU1, TU2 hervorgerufene Schwingungen im jeweiligen Gleichspannungskreis 1 mit Vorteil klein gehalten, so dass Leistungshalbleiterschalter der Teilumrichter TU1, TU2 , eine an die Umrichterschaltung normalerweise angeschlossene elektrische Last und ein mit der Umrichterschaltung verbundenes elektrisches Versorgungsnetz mit Vorteil nicht nennenswert oder nur sehr gering belastet werden.

Durch das vorstehend detailliert beschriebene erfindungsgemässe zyklische Austauschen der Ansteuersignalabfolgen PM1, PM2, invPM1, invPM2 wird erreicht, dass sich die Schaltverluste und die Leitverluste gleichmässig auf die Leistungshalbleiterschalter der beiden Teilumrichter TU1, TU2 verteilen, wodurch die Umrichterschaltung bezüglich der Halbleitertemperaturen mit maximaler Leistung betrieben werden können. Darüber hinaus beziehen die beiden Teilumrichter TU1, TU2 aufgrund des zyklischen Austausches der Ansteuersignalabfolgen PM1, PM2, invPM1, invPM2 im wesentlichen dieselbe Leistung beispielsweise aus einem angeschlossenen elektrischen Versorgungsnetz, wodurch die beiden Gleichspannungskreise 1 stationär im wesentlichen dieselbe Spannung aufweisen.

Für den Fachmann ist es klar, dass die Wahl der Bezeichnungen der ersten, zweiten und dritten Umrichterphase u, v, w mit der jeweils zughörigen ersten, zweiten und dritten Umrichterphasenspannung $U_u$, $U_v$, $U_w$ rein willkürlich gewählt ist und unterliegt keiner Beschränkung. So könnte beispielsweise auch die erste Umrichterphase mit w, die zweite Umrichterphase mit v und die dritte Umrichterphase mit u bezeichnet worden sein.

Insgesamt ist das erfindungsgemässe Verfahren zum Betrieb einer dreiphasigen Umrichterschaltung eine äusserst einfache Lösung, welche sich demnach leicht realisieren und bei bestehenden Umrichterschaltungen leicht implementieren lässt. Weiterhin ist das erfindungsgemässe Verfahren durch seine Einfachheit kostengünstig und dennoch hocheffizient.

## Bezugszeichenliste

1   Gleichspannungskreis
2   erste Spannungsreduziereinrichtung
3   zweite Spannungsreduziereinrichtung
4   Schaltsystem
5   erste Schaltgruppe
6   zweite Schaltgruppe
7   dritte Schaltgruppe

## Patentansprüche

1.  Verfahren zum Betrieb einer dreiphasigen Umrichterschaltung, **dadurch gekennzeichnet, dass** bei dem für eine erste Umrichterphase (u) jeweils zu einem Zeitpunkt (2n)-T für die Zeitdauer T ein erster Teilumrichter (TU1) durch eine erste Ansteuersignalabfolge (PM1) und jeweils zu einem Zeitpunkt (2n +1). T für eine Zeitdauer T durch eine zweite Ansteuersignalabfolge (PM2) angesteuert wird, bei dem für die erste Umrichterphase (u) jeweils zum Zeitpunkt (2n)-T für die Zeitdauer T ein zweiter Teilumrichter (TU2) durch die invertierte zweite Ansteuersignalabfolge (invPM2) und jeweils zum Zeitpunkt (2n+1).T für die Zeitdauer T durch die invertierte erste Ansteuersignalabfolge (invPM1) angesteuert wird,

bei dem für eine zweite Umrichterphase (w) jeweils zu einem Zeitpunkt $(2n+\frac{2}{3})\cdot$ T für die Zeitdauer T der erste Teilumrichter (TU1) durch die erste Ansteuersignalabfolge (PM1) und jeweils zu einem Zeitpunkt $(2n+\frac{5}{3})\cdot$ T für die Zeitdauer T durch die zweite Ansteuersignalabfolge (PM2) angesteuert wird, und

bei dem für die zweite Umrichterphase (w) jeweils zum Zeitpunkt $(2n+\frac{2}{3})\cdot$ T für die Zeitdauer T der zweite Teilumrichter (TU2) durch die invertierte zweite Ansteuersignalabfolge (invPM2) und jeweils zum Zeitpunkt $(2n+\frac{5}{3})\cdot$ T für die Zeitdauer T durch die invertierte erste Ansteuersignalabfolge (invPM1) angesteuert wird wobei n=0,1,2,3,... ist und T eine Periodendauer der Phasenspannung $(U_u)$ der ersten Umrichterphase (u) ist,

dass für eine dritte Umrichterphase (v) jeweils zu einem Zeitpunkt $(2n+\frac{1}{3})\cdot$ T für die Zeitdauer T der erste Teilumrichter (TU1) durch die zweite Ansteuersignalabfolge (PM2) und der zweite Teilumrichter (TU2) durch die invertierte erste Ansteuersignalabfolge (invPM1) angesteuert wird, und

dass für die dritte Umrichterphase (v)·jeweils zu einem Zeitpunkt $(2n+\frac{4}{3})\cdot$ T für die Zeitdauer T der erste Teilumrichter (TU1) durch die erste Ansteuersignalabfolge (PM1) und der zweite Teilumrichter (TU1) durch die invertierte zweite Ansteuersignalabfolge (invPm2) angesteuert wird.

2.  Verfahren nach Anspruch 1, **dadurch gekennzeichnet, dass** die erste Ansteuersignalabfolge (PM1), die invertierte erste Ansteuersignalabfolge (invPM1), die zweite Ansteuersignalabfolge (PM2) und die invertierte zweite Ansteuersignalabfolge (invPM2) jeweils eine Ablaufdauer aufweisen, die der Zeitdauer T entspricht.

**Claims**

1.  Method for operating a three-phase converter circuit, **characterized in that**, for a first converter phase (u), a first converter element (TU1) is driven by a first drive signal sequence (PM1) respectively at a time (2n).T for a duration T and by a second drive signal sequence (PM2) respectively at a time (2n+1)·T for the duration T,

for the first converter phase (u), a second converter element (TU2) is driven by the inverted second drive signal sequence (invPM2) respectively at the time (2n) · T for the duration T and by the inverted first drive signal sequence (invPM1) respectively at the time (2n+1)·T for the duration T,

for a second converter phase (w), the first converter element (TU1) is driven by the first drive signal sequence (PM1) respectively at a time $(2n+\frac{2}{3})\cdot$ T for the duration T and by the second drive signal sequence (PM2) respectively at a time $(2n+\frac{5}{3})\cdot$ T for the duration T, and

for the second converter phase (w), the second converter element (TU2) is driven by the inverted second drive signal sequence (invPM2) respectively at the time $(2n+\frac{2}{3})\cdot$ T for the duration T and by the inverted first drive signal sequence (invPM1) respectively at the time $(2n+\frac{5}{3})\cdot$ T for the duration T, where n = 0, 1, 2, 3,..., and T is a period duration of the phase voltage $(U_u)$ of the first converter phase (u), **in that**, for a third converter phase (v), respectively at a time $(2n+\frac{1}{3})\cdot$ T for the duration T the first converter element (TU1) is driven by the second drive signal sequence (PM2) and the second converter element (TU2) is driven by the inverted first drive signal sequence (invPM1), and

**in that**, for the third converter phase (v), respectively at a time $(2n+\frac{4}{3})\cdot$ T for the duration T the first converter element (TU1) is driven by the first drive signal sequence (PM1) and the second converter element (TU2) is driven by the inverted second drive signal sequence (invPM2).

2.  Method according to Claim 1, **characterized in that** the first drive signal sequence (PM1), the inverted first drive signal sequence (invPM1), the second drive signal sequence (PM2) and the inverted second drive signal sequence (invPM2) each have a runtime duration which corresponds to the duration T.

**Revendications**

1. Procédé de fonctionnement d'un circuit variateur triphasé, **caractérisé en ce que**, pendant une première phase de variateur (u), un premier variateur partiel (TU1) est à chaque fois commandé à un instant (2n).T pendant une durée T par une première séquence de signaux d'excitation (PM1) et à chaque fois à un instant (2n+1).T pendant la durée T par une deuxième séquence de signaux d'excitation (PM2), pendant la première phase de variateur (u), un deuxième variateur partiel (TU2) est à chaque fois commandé à l'instant (2n).T pendant la durée T par la deuxième séquence inversée de signaux d'excitation (invPM2) et à chaque fois à l'instant (2n+1).T pendant la durée T par la première séquence inversée de signaux d'excitation (invPM1), pendant une deuxième phase de variateur (w), le premier variateur partiel (TU1) est à chaque fois commandé à un instant (2n+2/3)·T pendant la durée T par la première séquence de signaux d'excitation (PM1) et à chaque fois à un instant (2n+5/3).T pendant la durée T par la deuxième séquence de signaux d'excitation (PM2), et pendant la deuxième phase de variateur (w), le deuxième variateur partiel (TU2) est à chaque fois commandé à l'instant (2n+2/3).T pendant la durée T par la deuxième séquence inversée de signaux d'excitation (invPM2) et à chaque fois à l'instant (2n+5/3).T pendant la durée T par la première séquence inversée de signaux d'excitation (invPM1), avec n = 0, 1, 2, 3, ... et T étant une durée de période de la tension de phase ($U_u$) de la première phase de variateur (u), **en ce que** pendant une troisième phase de variateur (v), le premier variateur partiel (TU1) est à chaque fois commandé à un instant (2n+1/3).T pendant la durée T par la deuxième séquence de signaux d'excitation (PM2) et le deuxième variateur partiel (TU2) par la première séquence inversée de signaux d'excitation (invPM1), et **en ce que** pendant la troisième phase de variateur (v), le premier variateur partiel (TU1) est à chaque fois commandé à un instant (2n+4/3).T pendant la durée T par la première séquence de signaux d'excitation (PM1) et le deuxième variateur partiel (TU2) par la deuxième séquence inversée de signaux d'excitation (invPM2).

2. Procédé selon la revendication 1, **caractérisé en ce que** la première séquence de signaux d'excitation (PM1), la première séquence inversée de signaux d'excitation (invPM1), la deuxième séquence de signaux d'excitation (PM2) et la deuxième séquence inversée de signaux d'excitation (invPM2) présentent respectivement une durée de déroulement qui correspond à la durée T.

**Stand der Technik**

**Fig. 1**

**Stand der Technik**

**Fig. 2**

Stand der Technik

Fig. 3

Fig. 4

$U_{TU1DC1}$    $U_{TU1DC2}$

$U_{TU2DC1}$    $U_{TU2DC2}$

**Stand der Technik**

**Fig. 5**

13

Fig. 6